# EUROPEAN PATENT SPECIFICATION

(11) **EP 3 807 841 B1**
(45) Date of publication and mention of the grant of the patent: **24.06.2026**
(21) Application number: 19752931.6
(22) Date of filing: 23.07.2019
(51) Int. Cl.: G06T 7/00, F03D 80/50

(54) **CONVOLUTIONAL NEURAL NETWORK BASED INSPECTION OF BLADE-DEFECTS OF A WIND TURBINE**
INSPEKTION VON DEFEKTEN VON ROTORBLÄTTERN EINER WINDTURBINE MITTELS FALTUNGSBASIERTER NEURONALER NETZE
INSPECTION DE DÉFAUTS DE PALES D'ÉOLIENNES BASÉE SUR DES RÉSEAUX DE NEURONES CONVOLUTIFS

(30) Priority: 03.08.2018 EP 18187326
(43) Date of publication of application: 21.04.2021
(73) Proprietor: Siemens Gamesa Renewable Energy A/S, 7330 Brande (DK)
(72) Inventor: BACH-ANDERSEN, Martin, 7300 Jelling (DK); DUDFIELD, Peter, 7400 Herning (DK); YASHCHENKO, Sergey, 22607 Hamburg (DE)
(74) Representative: SGRE-Association
(86) International application number: PCT/EP2019/069789
(87) International publication number: WO 2020/025392

(56) References cited:
- CN-A- 107 144 569
- CN-A- 107 153 842
- US-A1- 2012 076 345
- VLADIMIR FEDOROV: "DARWIN - Drone Application for Pioneering Reporting in Wind Turbine Blade Inspection", COMPOSITE STRUCTURES, 3 October 2017 (2017-10-03), GB, pages 1 - 20, XP055542823, ISSN: 0263-8223

## Description

The present invention relates to a method and a system for computer-implemented determination of blade-defects of a wind turbine and a computer program product. In particular, the invention relates to the visual inspection of blades of a wind turbine.

Over a period of use, damages to the rotor blades (short: blades) of a wind turbine, such as erosion, occur. To find such blade-defects, a number of high-resolution images is taken, for example, by a drone. Blade defect classification and localization in these images has been done up to now manually by annotators which visually analyze the images one by one. The annotators identify and mark positions of defects in the images. The so gathered information is stored in a database.

A major drawback of manually inspecting a plurality of images is that the detection accuracy sometimes is poor. In addition, the time required for the visual inspection is very high. This can take up to an hour to evaluate an image. As a result, this analysis is not cost-efficient.

Hence, there is a need for an easier method for the determination of blade-defects of a wind turbine.

US 2012/0076345 A1 discloses a method for wind turbine inspection. The method includes providing an inspection system spaced from the wind turbine, appraising a rotor blade of the wind turbine, and inspecting the rotor blade for indications. The inspection system includes an observation system and an inspection device, the observation system including an appraisal device and an automated scanning device. The appraisal device is configured to provide an image of at least a portion of the rotor blade. The automated scanning device is configured to rotate about at least one axis, shifting the image. The appraisal device provides a magnified view or image of the component of the wind turbine being appraised such that the component may be inspected for indications.

CN 107 144 569 A, CN 107 153 842 A and the publication Vladi-mir Fedorov "DARWIN - Drone Application for Pioneering Reporting in Wind Turbine Blade Inspection", COMPOSITE STRUCTURES, 3 October 2017, pages 1-20 disclose the use of convolutional neural networks for automatically segmenting and/or inspecting wind turbine blade areas.

It is therefore an object of the present invention to provide a method which allows a reliable and easy determination of blade-defects of a wind turbine. It is another object of the present invention to provide a system which allows a reliable and easy determination of blade-defects of a wind turbine.

These objects are solved by a method according to the features of claim 1, a computer program product according to claim 11 and a system according to claim 12. Preferred embodiments are set out in the dependent claims.

According to the invention, a method for computer-implemented determination of blade-defects of a wind turbine is suggested. The method comprises the following steps: S1) receiving, by an interface, an image of a wind turbine containing at least a part of one or more blades of the wind turbine, the image having a given original number of pixels in height and width; S2a) analyzing, by a processing unit, the image to determine an outline of the blades in the image; S2b) creating, by the processing unit, a modified image from the analyzed image having background of the image removed and containing image information of the blades only; and S3) analyzing, by the processing unit, the modified image to determine a blade defect and/or a blade defect type of the blades, wherein steps S2a) and S2b) are carried out using a first algorithm comprising at least one convolutional neural network (CNN) being trained with training data of manually annotated images of wind turbines. The annotation may be made with predefined object classes to structure image information. For example, four object classes may be used for annotation: blade, background, the same turbine in background, a different turbine in background. However, it is to be understood that the amount of classes and the content of the classes may be chosen in another way as well. Further, step S3) is carried out using a different convolutional neural network, CNN, being trained with training data that includes manual annotations for the blade defect and/or blade defect type.

This invention is based on the consideration that by applying deep learning models a computer-implemented, and therefore automated, determination of blade-defects of a wind turbine is enabled. Therefore, blade inspection takes less time and is more cost efficient. In addition, it does not require skilled image annotators.

The method uses a trained deep learning model that can run automatically on large amount of image data. The cost for annotation can be essentially decreased and quality of image annotation increased with further development of the deep learning models.

A major advantage of the method described is that blade-defect determination may be done on pixel-level which provides a high accuracy.

The method basically consists of the two steps of detecting the outline the blades in an image and creating a modified image which has any irrelevant information removed besides the blades. In other words, result of the first step is a modified image with simplified/reduced information as background information of the image is removed. This simplified image, called modified image, forms the basis for determining blade defects in the second step. This second step allows for gathering further information about the location of the defect as well as a type (also referred to as a class) of the identified defect.

Supervised machine learning models using fully convolutional neural networks (also known as CNNs) may be applied for both, the determination of the blade outline in steps S2a) and S2b) and the blade defect localization and classification in step S3). As known to the skilled person training and testing data is necessary to conduct supervised machine learning models. For training and testing of the models, images with precise annotations are used where the annotations are done manually. To enhance accuracy of the supervised machine learning models, patches of smaller size are produced from the original blade images (i.e. the images that are received at the interface) and used for model training. Implementation, training, testing, and deployment of the models may be made with open source tools.

The CNN may conduct a global model for global image segmentation and a local model for localized refinement of the segmentation from the global model. Both, the global model and the local model may use the same neural network architecture. The global model enables a rough identification of those parts in the image which show a blade to be assessed. The local model enables finding all those pixels in the image which relate to the blade of the wind turbine to be assessed.

In the global model and the local model, a number of predefined object classes are assigned to pixels or blocks of pixels in the annotated image, wherein the number of object classes relate to relevant and irrelevant image information necessary or not for determining the outline of the blades to be assessed. For example, the above mentioned four object classes may be used for annotation: blade, background, the same turbine in background, a different turbine in background. The predefined object classes may be used in an identical manner in both the global and the local model.

In the global model, during execution of the already trained CNN, the received image is resized to a resized image having a smaller second number of pixels in height and width as the resized image before proceeding to analyze, by a processing unit, the image to determine an outline of the blades in the image (step S2a)). Resizing the received image has the advantage that the amount of data to be processed can be reduced. This helps to speed up the determination of the blade outline.

According to a further preferred embodiment, as an output of the global model to be processed in step S2b), the resized image is annotated with the predefined object classes and up-scaled to the original number of pixels. Up-scaling enables a combination with processing within the local model.

In the local model, the received image and the up-scaled and annotated resized image are combined by execution of the already trained CNN to provide the modified image, which has the image information of the blades in the quality of the received image together with the annotation with the predefined object classes. This high-resolution image enables localization and classification of the blade-defect by means of a further already trained neural network in step S3).

In step S3), another neural network being trained with training data of manually annotated patches of modified images is executed to localize and classify blade-defects. For the development of blade defect classification and localization models, an erosion blade defect type (class) may be selected. A neural network architecture, e.g. an "erosion model" implemented in Keras or, as a further example, an "alternative erosion model" implemented in TensorFlow may be used. Keras and TensorFlow are known neural network tools (See [3] or [4], for example).

In step S3), the modified image may be resized to a resized modified image having a smaller second number of pixels in height and width as the modified image before annotating with a predefined defect class.

As an output, a resized and annotated modified image is up-scaled to the original number of pixels. For model training, the images and annotations are augmented by random flips and random changes in brightness and color saturation. Patches are only taken of the blade area. Images with no erosion are not used for training.

According to a further aspect, a computer program product, directly loadable into the internal memory of a digital computer, comprising software code portions for performing the steps of one of the preceding claims when said product is run on a computer, is suggested. The computer program product may be in the form of a storage medium, such as a DVD, CD-ROM, USB-memory stick, and so on. Alternatively, the computer program product may in the form of a signal which may be transmitted via a wired or wireless communication line.

According to a further aspect, a system for computer-implemented determination of blade-defects of a wind turbine, is suggested. The system comprises an interface for receiving an image of a wind turbine containing at least a part of one or more blades of the wind turbine, the image having a given original number of pixels in height and width, and a processing unit. The processing unit is adapted to analyze the image to determine an outline of the blades in the image. The processing unit is adapted tocreate a modified image from the analyzed image having background of the image removed and containing image information of the blades only by using a first algorithm comprising at least one convolutional neural network, CNN, being trained with training data of manually annotated images of wind turbines. Furthermore, the processing unit is adapted to analyze the modified image to determine a blade defect and/or a blade defect type of the blades by using a different CNN being trained with training data that includes manual annotations for the blade defect and/or blade defect type.

The system has the same advantages as they have been described in accordance with the method described herein.

The invention will be described in more detail by means of the accompanying figures.
- Fig. 1: a received image and an annotated image used for training of a convolutional neural network CNN;
- Fig. 2: a diagram illustrating the two-step process according to the method of the present invention;
- Fig. 3: a received image and a modified image resulting from the first step of the method;
- Fig. 4: a modified image and an annotated image resulting from the second step of the method;
- Fig. 5: a block diagram illustrating a system according to the invention; and
- Fig. 6: a flow chart illustrating the steps according to the method of the invention.

To avoid time consuming and not cost-efficient manual determination of blade-defects of a wind turbine, a method of auautomatic blade defect classification and localization in images is described below.

The method uses supervised machine learning models using fully convolutional neural networks CNN. CNNs are used for both steps of blade detection and localization (corresponding to finding a blade outline) and removal of the background such that the blade outline remains as only image information in so-called modified images as well as blade defect classification and localization in images with outlined blades and removed background. The step of blade defect classification and localization may be done on pixel level which results in a high accuracy of determined blade-defects.

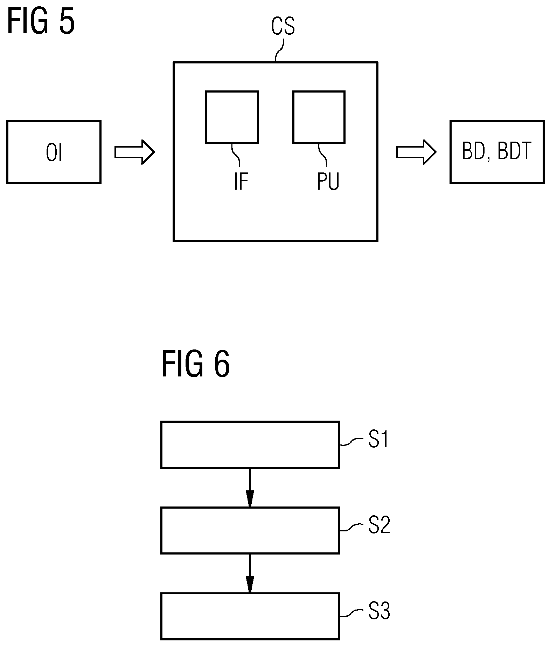

To be able to conduct CNNs, training with suitable training data is necessary. For this purpose, a plurality of images is manually annotated with predefined object classes for training and testing the models. The purpose of annotation with predefined object classes is to structure image information of images received by an interface IF of a computing system CS (Fig. 5). The amount of classes and the content of the classes may be chosen in a suitable manner.

To enhance and speed-up training, patches of smaller size may be produced from original blade images and used for model training. Implementation, training, testing, and deployment of the models may be made with open source tools.

It is known from [1] to use fully CNNs for semantic image segmentation. The method described in [1] allows the detection and localization of objects in images simultaneously at most precise level, i.e. pixel level. A CNN as proposed in [1] may be used as a basis to implement the method as described below.

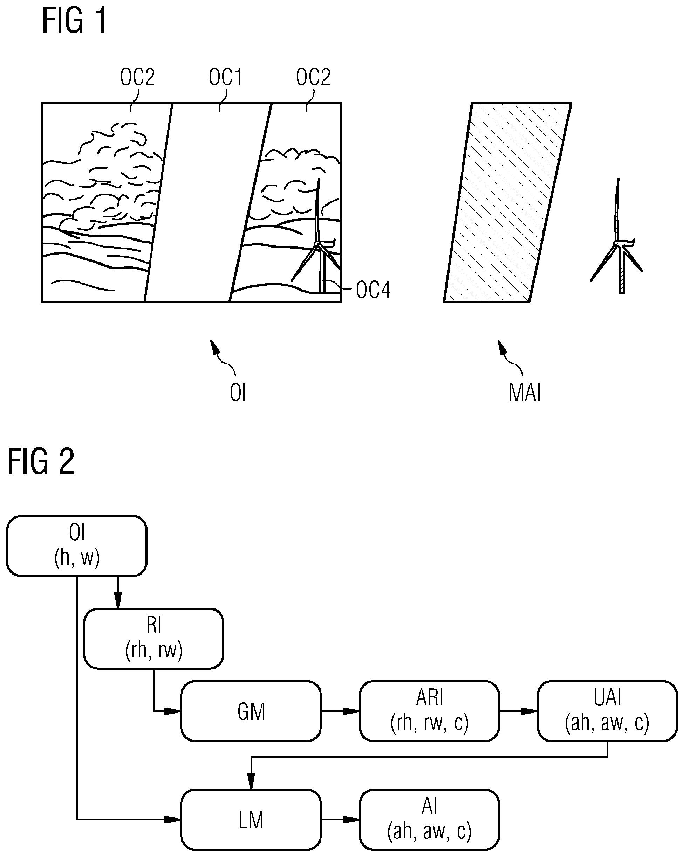

For training of the deep learning models precise blade image annotations are needed. The annotations are prepared manually by annotators. Fig. 1 shows on its left side an example of an image OI as it is taken, e.g. by a drone. Such an "original" image will be referred to as a received image OI which is received by the interface IF of the computing system CS according to the invention (Fig. 6). The original image OI shows, by way of example, a part of a blade (denoted with OC1 according to a predefined first object class) with potential defects of a wind turbine to be assessed (in the middle of the image), background (denoted with OC2 according to a predefined second object class) and another wind turbine (denoted with OC4 according to a predefined forth object class) in the background.

The right side of Fig. 1 shows a manually annotated image MAI of the original image OI. The annotated image MAI has annotations made by colorings according to the predefined object classes. For example, four object classes OC1,..., OC4 may be used for annotation: blade (OC1), background (OC2), the same turbine in background (OC3 - not shown in Fig.1), a different turbine in background (OC4). However, the amount of classes and the content of the classes may be chosen in another way as well. The annotated image MAI consists of a single-colored outline of the blade (denoted with OC1 according to its belonging to object class OC1) and a single-colored turbine in the background having a different color (denoted with OC4 according to its belonging to object class OC4). The background belonging to object class OC2 is removed.

A plurality of manually annotated images MAI as shown in Fig. 1 is used to train the CNN.

The determination of blade-defects, such as erosion, comprises localization of blade-defects as well as classification of the localized blade-defects. The latter refers to finding a (predefined) type of the localized blade-defect. The below described automated method for detecting and localizing blade-defects of a wind turbine basically consists of two stages, namely the localization of the blade in the received (original) image and the determination of its outline in the image and the localization and classification of blade-defects.

### Determination of the blade outline

The blade outline model is illustrated in Fig. 2 and uses a two-step process. A global model GM serves for a global image segmentation and a local model LM serves for a localized refinement of the segmentation from the global model GM. Both, the global model and the local model use the same neural network architecture. The neural network architecture may be, for example, represented by seven (7) convolution and max pooling blocks and three (3) up-sampling and convolution blocks implemented using PyTorch [3]. After this, the probabilities of the four output classes are calculated and then up-sampled to the original image size.

Training of the global model works as follows. As an input, the global model GM receives the original image OI in a resized size as resized image RI. While the original image OI has a number h of pixels in height and a number w of pixels in width (in short notation: OI(h,w)), the resized image RI has a number rh of pixels in height and a number rw of pixels in width (in short notation: RI(rh,rw)), where rh < h and rw < w. The global model is trained to add annotations to the resized image, resulting in an annotated resized image ARI having the same size as the resized image, i.e. ARI(rw,rh,c), where c denotes the number of predefined object classes OCi used for annotations, where i = 1 ... c. According to the above chosen example is c = 4 as four object classes are used: blade, background, the same turbine in background, a different turbine in background. The annotated resized image ARI together with its annotations is up-scaled, resulting in an up-scaled and annotated image UAI having a number ah of pixels in height and a number aw of pixels in width (in short notation: UAI(ah,aw,c)), where ah = h and aw = w. In other words, the size of the up-scaled and annotated image UAI corresponds to the size of the original image OI or UAI(ah,aw,c) = UAI(h,w,c). For training, augmentation of the images and annotations is made by random flips and random changes in brightness and color saturation. For training purposes, patches of the blade area are considered only. Images with no erosion are not used for training.

After training of the global model GM is finished, the global model is executed as follows: As an input, the global model GM receives the original image OI(h,w) in a resized (downsized) size as resized image RI(rh,rw). As an output, an annotated resized image ARI(rw,rh,c) having the same size as the resized image RI is generated. The annotated resized image ARI(rw,rh,c) is up-scaled (augmented) to the up-scaled and annotated image UAI(ah,aw,c), as shown in Fig. 2. The up-scaled and annotated image UAI(ah,aw,c) = UAI(h,w,c) as well as the original image OI(h,w) will be used as input information in the local model LM.

Training of the local model LM works as follows. As an input, the local model LM receives patches of the original image OI(h,w) in full resolution and their annotations from the up-scaled and annotated image UAI(ah,aw,c) = UAI(h,w,c) provided by the global model GM. The object classes OCi of the annotation are defined the same way as for the global model training. Further, the four probabilities from the output of the global model (UAI (ah,aw,c) in Fig. 2) are used as input. The images and annotations are up-scaled resulting in an annotated image AI(ah,aw,c) having the same size as the original image OI(h,w), i.e. ah = h and aw = w. In other words, the size of the up-scaled and annotated image AI being the output of the local model LM corresponds to the size of the original image OI or AI(ah,aw,c) = AI(h,w,c). For training purposes, patches of the blade area are considered only. Images with no erosion are not used for training.

After training of the local model LM is finished, the local model LM is executed as follows: As an input, the local model LM receives the original image OI(h,w) in full resolution and the probabilities of their annotations from the up-scaled and annotated image UAI(ah,aw,c) = UAI(h,w,c) provided by the global model GM. As an output, the annotated image AI(ah,aw,c) is provided. Annotations are defined the same way as for the local model training. The annotated image AI constitutes a modified image being the input for further assessment in the next, second step.

### Blade defect classification and localization

For the development of blade defect classification and localization models, an erosion blade defect type is selected. Two different neural network architectures may be utilized, a first model called "erosion model" and an alternative or second model called "alternative erosion model". For example, the erosion model may be implemented in Keras (see [3]) and the alternative erosion model may be implemented in TensorFlow (see [4]).

The erosion model architecture consists of 4 blocks of convolution and max pooling layers and then 4 blocks up-sampling and convolution layers. For training of the neural network, patches POI from original images OI with POI (eh,ew) pixels (eh < h and ew < w) and annotations are resized to POI(reh, rew) pixels (reh > eh and rew > ew) with the removed background. In annotation, predefined blade and defect type (erosion in this case) classes are used.

After training of the erosion model is finished, it is executed as follows: As input, the erosion model receives the original image OI(h,w) which is resized to RMI(rh,rw) pixels. In the resized original image RMI(rh,rw), the background is removed using the information of the modified image AI. The erosion model outputs an up-scaled and annotated image RAMI of the size (h,w), i.e. RAMI(h,w), which results from upscaling RMI(rh,rw) .

The alternative erosion model uses a fully convolutional network architecture described in [1] and may be implemented using TensorFlow described in [4]. Two classes are considered: erosion and no erosion that includes background, blades, and other defect types. The alternative erosion model is trained on patches of predetermined pixel size (which is of course smaller than the size of the original image) produced using random positions, random rotations, random horizontal flips and random vertical flips.

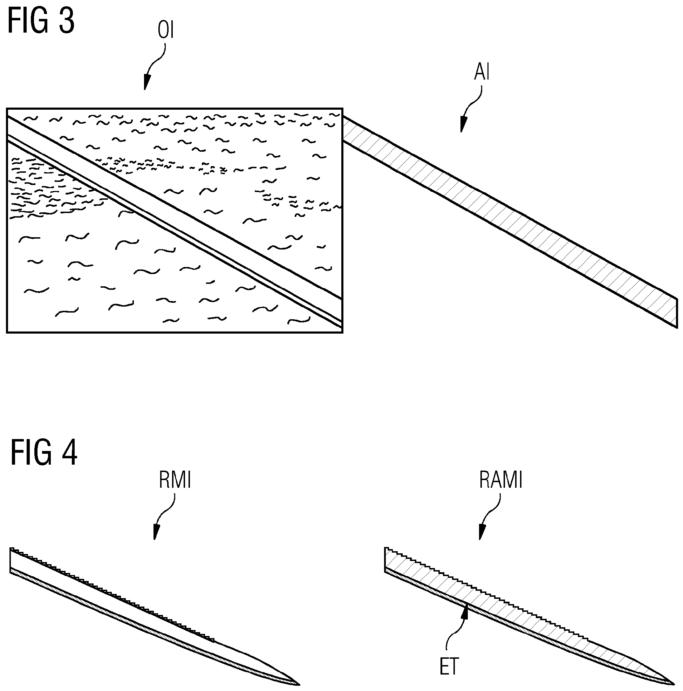

Examples of results of the blade outline model and the erosion model are shown in Figs. 3 and 4, respectively. Fig. 3 shows the results of the blade outline model, in detail the blade image on the left side and the result of the blade outline model on the right side. The blade and its location is clearly identified and visible in the figure. Fig. 4 illustrates the results of the erosion model, wherein the blade image is shown on the left side and the result of the erosion model is shown on the right side. The erosion defect type is identified and marked by a predefined color (which is marked by arrow ET in the figure).

The results of the models performance are presented in Table 1, where TP, FP, and FN are defined as true positives, false positives, and false negatives, respectively. The results demonstrate good performance of the blade outline model as well as both models for erosion blade defect detection and localization.

**Table 1: Results of the models performance**

| **Model** | **TP/ (TP+FP+ FN)** | **TP** | **FP** |
|---|---|---|---|
| Blade outline | 0.85 | 0.95 | 0.012 |
| Erosion model | 0.44 | 0.65 | 0.07 |
| Alternative erosion model | 0.55 | 0.75 | 0.05 |

Fig. 6 illustrates a flow diagram of the invention described. The method is executed by the computing system CS comprising an interface IF and a processing unit PU and which is illustrated in Fig. 5. The method for determination of blade-defects is carried out computer-implemented by the computing system CS. In step S1) an image OI of a wind turbine containing at least a part of one or more blades of the wind turbine is received by the interface IF of the computer system CS. The image has a given original number of pixels in height and width. Step S2) basically consists of two consecutive steps S2a) and S2b) which are executed by the processing unit PU of the computers system CS. In step S2a) the image is analyzed to determine an outline of the blades in the image. In step S2b) a modified image is created from the analyzed image containing image information of the blades only. Finally, step S3) consists of analyzing, by the processing unit PU, the modified image to determine a blade defect and/or a blade defect type of the blades. As a result, blade defects BD and/or blade defect types BDT are output by the processing unit PU.

Summarizing, the method basically consists of the two steps of detecting the outline of the blades in an image and creating a modified image which has any irrelevant information removed besides the blades. In other words, result of the first step is a modified image with simplified/reduced information as background information of the image is removed. This simplified image, called modified image, forms the basis for determining blade defects in the second step. This second step allows for gathering further information about the location of the defect as well as a type (also referred to as a class) of the identified defect.

The proposed method enables a computer-implemented, and therefore automated, determination of blade-defects of a wind turbine. Therefore, blade inspection takes less time and is more cost efficient. In addition, it does not require skilled image annotators after neural networks have been trained.

The method uses a trained deep learning model that can run automatically on large amount of image data. The cost for annotation can be essentially decreased and quality of image annotation increased with further development of the deep learning models.

A major advantage of the method described is that blade-defect determination may be done on pixel-level which provides a high accuracy.

## Claims

1. A method for computer-implemented determination of blade-defects of a wind turbine, comprising the steps of:
| | |
|---|---|
| S1) | receiving, by an interface (IF), an image (OI) of a wind turbine containing at least a part of one or more blades of the wind turbine, the image (OI) having a given original number of pixels (h, w) in height and width; |
| S2a) | analyzing, by a processing unit (PU), the image (OI) to determine an outline of the blades in the image; |
| S2b) | creating, by the processing unit, a modified image (AI) from the analyzed image (OI) having background of the image (OI) removed and containing image information of the blades only; and |
| S3) | analyzing, by the processing unit (PU), the modified image (AI) to determine a blade defect (BD) and/or a blade defect type (BDT) of the blades; |
wherein steps S2a) and S2b) are carried out using a first algorithm comprising at least one (GM, LM) convolutional neural network, CNN, being trained with training data of manually annotated images of wind turbines, and
wherein step S3) is carried out using a different convolutional neural network, CNN, being trained with training data that includes manual annotations for the blade defect and/or blade defect type.

2. The method according to claim 1, wherein the CNN conducts a global model (GM) for global image segmentation and a local model (LM) for localized refinement of the segmentation from the global model (GM).

3. The method according to claim 2, wherein, in the global model (GM) and the local model (LM), a number of predefined object classes (OCi) are assigned to pixels or blocks of pixels in an annotated image (ARI, UAI), wherein the number of object classes (OCi) relate to relevant and irrelevant image information necessary or not for determining the outline of the blades to be assessed.

4. The method according to claim 2 or 3, wherein, in the global model (GM), the received image (OI) is resized to a resized image (RI) having a smaller second number of pixels (rh, rw) in height and width as the resized image (OI) before proceeding to step S2a).

5. The method according to one of claims 2 to 4, wherein as an output of the global model (GM) to be processed in step S2b), the resized image (RI) is annotated with the predefined object classes and up-scaled to the original number of pixels (h, w).

6. The method according to one of claims 2 to 5, wherein in the local model (LM), the received image (OI) and the up-scaled and annotated resized image (UARI) is annotated with the predefined object classes (OCi), wherein the result of this processing constitutes the modified image (AI).

7. The method according to one of the preceding claims, wherein in step S3), another neural network being trained with training data of manually annotated patches of modified images (AI) is executed.

8. The method according to one of the preceding claims, wherein in step S3), the modified image (AI) is resized to a resized modified image having a smaller second number of pixels (rh, rw) in height and width as the modified image before annotating with a predefined defect class.

9. The method according to claim 7 or 8, wherein as an output, resized and annotated modified image is up-scaled to the original number of pixels (h, w).

10. Computer program product, directly loadable into the internal memory of a digital computer, comprising software code portions for performing the steps of one of the preceding claims when said product is run on a computer.

11. A system for computer-implemented determination of blade-defects of a wind turbine, comprising:
- an interface (IF) for receiving an image (OI) of a wind turbine containing at least a part of one or more blades of the wind turbine, the image having a given original number of pixels (h, w) in height and width;
- a processing unit (PU) adapted to
= analyze the image (OI) to determine an outline of the blades in the image (OI) and create a modified image (AI) from the analyzed image (OI) having background of the image (OI) removed and containing image information of the blades only by using a first algorithm comprising at least one (GM, LM) convolutional neural network, CNN, being trained with training data of manually annotated images of wind turbines; and
= analyze the modified image (AI) to determine a blade defect (BD) and/or a blade defect type (BDT) of the blades by using a different convolutional neural network, CNN, being trained with training data that includes manual annotations for the blade defect and/or blade defect type.

## Patentansprüche

1. Verfahren zur computerimplementierten Bestimmung von Defekten von Rotorblättern einer Windturbine, umfassend die folgenden Schritte:
| | |
|---|---|
| S1) | Empfangen, durch eine Schnittstelle (IF), eines Bildes (OI) einer Windturbine, das mindestens einen Teil eines oder mehrerer Rotorblätter der Windturbine enthält, wobei das Bild (OI) eine gegebene ursprüngliche Anzahl von Pixeln (h, w) in Höhe und Breite aufweist; |
| S2a) | Analysieren, durch eine Verarbeitungseinheit (PU), des Bildes (OI), um einen Umriss der Rotorblätter in dem Bild zu bestimmen; |
| S2b) | Erzeugen, durch die Verarbeitungseinheit, eines modifizierten Bildes (AI) anhand des analysierten Bildes (OI), bei dem der Hintergrund des Bildes (OI) entfernt wurde und das Bildinformationen nur der Rotorblätter enthält; und |
| S3) | Analysieren, durch die Verarbeitungseinheit (PU), des modifizierten Bildes (AI), um einen Rotorblattdefekt (BD) und/oder einen Rotorblattdefekttyp (BDT) der Rotorblätter zu bestimmen; |
wobei die Schritte S2a) und S2b) unter Verwendung eines ersten Algorithmus ausgeführt werden, der mindestens ein (GM, LM) neuronales Faltungsnetz, CNN, umfasst, das mit Trainingsdaten von manuell annotierten Bildern von Windturbinen trainiert wird, und
wobei Schritt S3) unter Verwendung eines anderen neuronalen Faltungsnetzes, CNN, ausgeführt wird, das mit Trainingsdaten trainiert wird, die manuelle Annotationen für den Rotorblattdefekt und/oder den Rotorblattdefekttyp beinhalten.

2. Verfahren nach Anspruch 1, wobei das CNN ein globales Modell (GM) zur globalen Bildsegmentierung und ein lokales Modell (LM) zur lokalisierten Verfeinerung der Segmentierung anhand des globalen Modells (GM) durchführt.

3. Verfahren nach Anspruch 2, wobei in dem globalen Modell (GM) und dem lokalen Modell (LM) eine Anzahl von vordefinierten Objektklassen (OCi) Pixeln oder Blöcken von Pixeln in einem annotierten Bild (ARI, UAI) zugeordnet ist, wobei sich die Anzahl von Objektklassen (OCi) auf relevante und irrelevante Bildinformationen stützt, die zum Bestimmen des Umrisses der zu bewertenden Rotorblätter notwendig sind oder nicht.

4. Verfahren nach Anspruch 2 oder 3, wobei das empfangene Bild (OI) in dem globalen Modell (GM) vor dem Weitergehen zu Schritt S2a) auf ein größenverändertes Bild (RI), das eine kleinere zweite Anzahl von Pixeln (rh, rw) in Höhe und Breite aufweist als das größenveränderte Bild (OI), hinsichtlich der Größe verändert wird.

5. Verfahren nach einem der Ansprüche 2 bis 4, wobei das größenveränderte Bild (RI) als eine in Schritt S2b) zu verarbeitende Ausgabe des globalen Modells (GM) mit den vordefinierten Objektklassen annotiert und auf die ursprüngliche Anzahl von Pixeln (h, w) hochskaliert wird.

6. Verfahren nach einem der Ansprüche 2 bis 5, wobei das empfangene Bild (OI) und das hochskalierte und annotierte größenveränderte Bild (UARI) in dem lokalen Modell (LM) mit den vordefinierten Objektklassen (OCi) annotiert werden, wobei das Ergebnis dieser Verarbeitung das modifizierte Bild (AI) darstellt.

7. Verfahren nach einem der vorhergehenden Ansprüche, wobei in Schritt S3) ein anderes neuronales Netz ausgeführt wird, das mit Trainingsdaten von manuell annotierten Patches von modifizierten Bildern (AI) trainiert wird.

8. Verfahren nach einem der vorhergehenden Ansprüche, wobei in Schritt S3) das modifizierte Bild (AI) vor dem Annotieren mit einer vordefinierten Defektklasse auf ein größenverändertes modifiziertes Bild, das eine kleinere zweite Anzahl von Pixeln (rh, rw) in Höhe und Breite aufweist als das modifizierte Bild, hinsichtlich der Größe verändert wird.

9. Verfahren nach Anspruch 7 oder 8, wobei das größenveränderte und annotierte modifizierte Bild als eine Ausgabe auf die ursprüngliche Anzahl von Pixeln (h, w) hochskaliert wird.

10. Computerprogrammprodukt, das direkt in den internen Speicher eines digitalen Computers ladbar ist, umfassend Softwarecodeabschnitte zum Durchführen der Schritte nach einem der vorhergehenden Ansprüche, wenn das Produkt auf einem Computer läuft.

11. System zur computerimplementierten Bestimmung von Defekten von Rotorblättern einer Windturbine, umfassend:
- eine Schnittstelle (IF) zum Empfangen eines Bildes (OI) einer Windturbine, das mindestens einen Teil eines oder mehrerer Rotorblätter der Windturbine enthält, wobei das Bild eine gegebene ursprüngliche Anzahl von Pixeln (h, w) in Höhe und Breite aufweist;
- eine Verarbeitungseinheit (PU), die zu Folgendem ausgelegt ist:
= Analysieren des Bildes (OI), um einen Umriss der Rotorblätter in dem Bild (OI) zu bestimmen und ein modifiziertes Bild (AI) anhand des analysierten Bildes (OI) zu erzeugen, bei dem der Hintergrund des Bildes (OI) entfernt wurde und das Bildinformationen nur der Rotorblätter enthält, unter Verwendung eines ersten Algorithmus, der mindestens ein (GM, LM) neuronales Faltungsnetz, CNN, umfasst, das mit Trainingsdaten manuell annotierter Bilder von Windturbinen trainiert wird; und
= Analysieren des modifizierten Bildes (AI), um einen Rotorblattdefekt (BD) und/oder einen Rotorblattdefekttyp (BDT) der Rotorblätter unter Verwendung eines anderen neuronalen Faltungsnetzes, CNN, zu bestimmen, das mit Trainingsdaten trainiert wird, die manuelle Annotationen für den Rotorblattdefekt und/oder den Rotorblattdefekttyp beinhalten.

## Revendications

1. Procédé pour la détermination mise en œuvre par ordinateur de défauts de pale d'une éolienne, comprenant les étapes consistant à :
| | |
|---|---|
| S1) | recevoir, par une interface (IF), une image (OI) d'une éolienne contenant au moins une partie d'une ou plusieurs pales de l'éolienne, l'image (OI) ayant un nombre d'origine donné de pixels (h, w) en hauteur et en largeur ; |
| S2a) | analyser, par une unité de traitement (PU), l'image (OI) pour déterminer un contour des pales dans l'image ; |
| S2b) | créer, par l'unité de traitement, une image modifiée (AI) à partir de l'image analysée (OI) ayant le fond de l'image (OI) supprimé et contenant des informations d'image des pales uniquement ; et |
| S3) | analyser, par l'unité de traitement (PU), l'image modifiée (AI) pour déterminer un défaut de pale (BD) et/ou un type de défaut de pale (BDT) des pales ; |
dans lequel les étapes S2a) et S2b) sont réalisées en utilisant un premier algorithme comprenant au moins un (GM, LM) réseau neuronal convolutif, CNN, étant entraîné avec des données d'entraînement d'images annotées manuellement d'éoliennes, et
dans lequel l'étape S3) est réalisée en utilisant un réseau neuronal convolutif, CNN, différent, étant entraîné avec des données d'entraînement qui incluent des annotations manuelles pour le défaut de pale et/ou le type de défaut de pale.

2. Procédé selon la revendication 1, dans lequel le CNN met en œuvre un modèle global (GM) pour une segmentation d'image globale et un modèle local (LM) pour un affinement localisé de la segmentation issue du modèle global (GM).

3. Procédé selon la revendication 2, dans lequel, dans le modèle global (GM) et le modèle local (LM), un nombre de classes d'objets (OCi) prédéfinies sont attribuées à des pixels ou des blocs de pixels dans une image annotée (ARI, UAI), dans lequel le nombre de classes d'objets (OCi) se rapporte à des informations d'image pertinentes et non pertinentes nécessaires ou non pour déterminer le contour des pales à évaluer.

4. Procédé selon la revendication 2 ou 3, dans lequel, dans le modèle global (GM), l'image reçue (OI) est redimensionnée en une image redimensionnée (RI) ayant un second nombre de pixels (rh, rw) plus petit en hauteur et en largeur que l'image redimensionnée (OI) avant de passer à l'étape S2a).

5. Procédé selon l'une des revendications 2 à 4, dans lequel, en tant que sortie du modèle global (GM) devant être traitée à l'étape S2b), l'image redimensionnée (RI) est annotée avec les classes d'objets prédéfinies et mise à l'échelle supérieure jusqu'au nombre d'origine de pixels (h, w).

6. Procédé selon l'une des revendications 2 à 5, dans lequel, dans le modèle local (LM), l'image reçue (OI) et l'image redimensionnée mise à l'échelle supérieure et annotée (UARI) sont annotées avec les classes d'objets (OCi) prédéfinies, dans lequel le résultat de ce traitement constitue l'image modifiée (AI).

7. Procédé selon l'une des revendications précédentes, dans lequel, à l'étape S3), un autre réseau neuronal étant entraîné avec des données d'entraînement de patchs annotés manuellement d'images modifiées (AI) est exécuté.

8. Procédé selon l'une des revendications précédentes, dans lequel, à l'étape S3), l'image modifiée (AI) est redimensionnée en une image modifiée redimensionnée ayant un second nombre de pixels (rh, rw) plus petit en hauteur et en largeur que l'image modifiée avant l'annotation avec une classe de défaut prédéfinie.

9. Procédé selon la revendication 7 ou 8, dans lequel, en tant que sortie, l'image modifiée redimensionnée et annotée est mise à l'échelle supérieure jusqu'au nombre d'origine de pixels (h, w).

10. Produit de programme informatique, pouvant être chargé directement dans la mémoire interne d'un ordinateur numérique, comprenant des parties de code logiciel pour réaliser les étapes de l'une des revendications précédentes lorsque ledit produit est exécuté sur un ordinateur.

11. Système pour la détermination mise en œuvre par ordinateur de défauts de pale d'une éolienne, comprenant :
- une interface (IF) pour recevoir une image (OI) d'une éolienne contenant au moins une partie d'une ou plusieurs pales de l'éolienne, l'image ayant un nombre d'origine donné de pixels (h, w) en hauteur et en largeur ;
- une unité de traitement (PU) adaptée pour
= analyser l'image (OI) pour déterminer un contour des pales dans l'image (OI) et créer une image modifiée (AI) à partir de l'image analysée (OI) ayant le fond de l'image (OI) supprimé et contenant des informations d'image des pales uniquement en utilisant un premier algorithme comprenant au moins un (GM, LM) réseau neuronal convolutif, CNN, étant entraîné avec des données d'entraînement d'images annotées manuellement d'éoliennes ; et
= analyser l'image modifiée (AI) pour déterminer un défaut de pale (BD) et/ou un type de défaut de pale (BDT) des pales en utilisant un réseau neuronal convolutif, CNN, différent, étant entraîné avec des données d'entraînement qui incluent des annotations manuelles pour le défaut de pale et/ou le type de défaut de pale.
